# EUROPEAN PATENT APPLICATION

(11) **EP 4 759 518 A1**
(43) Date of publication of application: **17.06.2026**
(21) Application number: 24897928.8
(22) Date of filing: 04.11.2024
(51) Int. Cl.: B29C 65/02, B29C 65/00, H01M 50/105, H01M 50/183, B29L 31/00

(54) **SEALING DEVICE**

(30) Priority: 29.11.2023 KR 20230169683
(71) Applicant: LG Energy Solution, Ltd., Seoul 07335 (KR)
(72) Inventor: LEE, Yong Tae, Daejeon 34122 (KR); KO, Myung Hoon, Daejeon 34122 (KR); LEE, Hyun Sang, Daejeon 34122 (KR)
(74) Representative: Plasseraud IP
(86) International application number: PCT/KR2024/017202
(87) International publication number: WO 2025/116331

(57) **Abstract**

A sealing device according to an embodiment of the present disclosure seals a lead film covering a lead metal of an electrode lead and a pouch enclosing the lead film. The sealing device includes a sealing block including at least one sealing surface provided to press the lead film and the pouch overlapping with each other; and a sealing protrusion provided on a portion of the sealing surface to protrude from the sealing surface with a predetermined thickness in a pressing direction of the sealing block to prevent the lead film from flowing into a width direction of the sealing surface.

## Description

### TECHNICAL FIELD

### CROSS-REFERENCE TO RELATED APPLICATIONS

This application is based on and claims priority from Korean Patent Application No. 10-2023-0169683, filed on November 29, 2023, with the Korean Intellectual Property Office, the disclosure of which is incorporated herein in its entirety by reference.

### TECHNICAL FIELD

The present disclosure relates to a sealing device for sealing pouches for secondary batteries.

### BACKGROUND ART

Secondary batteries are attracting attention as a new energy source for improvements in eco-friendly energy and energy efficiency, in that secondary batteries not only have the primary advantage of remarkably reducing the use of fossil fuels, but also do not generate byproducts due to the use of energy.

In a manufacturing process of a pouch-type secondary battery, a pouch, which is a packaging material, and an electrode lead are heat-sealed by a heating block or heating jig, which is a medium that provides heat and pressure. A bonding layer (*e.g.,* polypropylene (PP) layer) on an outer peripheral surface of the pouch, which exists in the form of a thin film, is melted by applied heat to increase the degree of freedom of flow, and then, is hardened by an appropriate cooling process to be bonded.

### SUMMARY

### TECHNICAL PROBLEM

The present disclosure provides a sealing device capable of suppressing or preventing a lead film covering a lead metal from flowing into an inner-outer direction of a pouch, during sealing.

### TECHNICAL SOLUTION

A sealing device according to an embodiment of the present disclosure may be provided to seal a lead film covering a lead metal of an electrode lead and a pouch enclosing the lead film. The sealing device may include a sealing block including at least one sealing surface provided to press the lead film and the pouch overlapping with each other; and a sealing protrusion provided on a portion of the sealing surface to protrude from the sealing surface with a predetermined thickness in a pressing direction of the sealing block to suppress or prevent the lead film from flowing into a width direction of the sealing surface.

The sealing surface may include a first sealing surface provided to seal a central portion of the lead film overlapping with the lead metal; and a second sealing surface formed on both end portions of the first sealing surface to be stepped from the first sealing surface to seal an edge portion of the lead film.

The sealing protrusion may be provided on the second sealing surface.

The sealing protrusion may have a shape extending along a length direction perpendicular to a width direction of the second sealing surface.

A plurality of sealing protrusions may be provided to be spaced apart in the width direction of the second sealing surface.

The sealing protrusion may be formed on an end of the width direction of the second sealing surface.

The sealing protrusion may include a first sealing protrusion formed on the second sealing surface; and a second sealing protrusion provided to be spaced apart from the first sealing protrusion in the width direction of the second sealing surface.

The first sealing protrusion may be formed at one end portion of the second sealing surface, and the second sealing protrusion may be formed at the other end portion of the second sealing surface.

The sealing surface may further include a third sealing surface that is positioned on an opposite side of the first sealing surface based on the second sealing surface and seals pouches. The sealing protrusion may further include a third sealing protrusion that is provided on the third sealing surface and extends from the second sealing protrusion.

The sealing block may be provided as a pair of sealing blocks that is spaced apart from each other in the pressing direction.

### ADVANTAGEOUS EFFECTS

A sealing device according to an embodiment of the present disclosure may suppress or prevent a phenomenon in which a lead film covering a lead metal flows into an inner-outer direction of a pouch, during sealing. Thus, the durability and quality of a pouch-type secondary battery may be improved.

In addition, effects capable of being easily predicted by those skilled in the art from configurations according to embodiments of the present disclosure may be included in the specification.

### BRIEF DESCRIPTION OF THE DRAWINGS

The following drawings attached hereto exemplify embodiments of the present disclosure and serve to help further understanding of the technical idea of the present disclosure together with the detailed description of the disclosure to be described later. Therefore, the present disclosure should not be construed as being limited to the matters illustrated in the drawings.
FIG. 1 is a perspective view of a sealing block of a sealing device according to a comparative example of the present disclosure.
FIG. 2 is an enlarged view of a sealing portion illustrated in FIG. 1.
FIG. 3 is a schematic view illustrating a form of the sealing device, according to the comparative example of the present disclosure, sealing a lead film and a pouch.
FIG. 4 is a cross-sectional view taken along line I-I of FIG. 3.
FIG. 5 illustrates a phenomenon in which the lead film protrudes in a width direction of a sealing surface.
FIG. 6 is a perspective view of a sealing block of a sealing device according to an embodiment 1 of the present disclosure.
FIG. 7 is an enlarged view of a sealing portion illustrated in FIG. 6.
FIG. 8 is a schematic view illustrating a form of the sealing device, according to the embodiment 1 of the present disclosure, sealing a lead film and a pouch.
FIG. 9 is a cross-sectional view taken along line II-II of FIG. 8.
FIG. 10 is a cross-sectional view taken along line III-III of FIG. 8.
FIG. 11 is an enlarged view of a portion of a sealing portion of a sealing device according to an embodiment 2 of the present disclosure.
FIG. 12 is a schematic view illustrating a form of the sealing device, according to the embodiment 2 of the present disclosure, sealing a lead film and a pouch.

In some of the attached drawings, corresponding components are given the same reference numerals. Those skilled in the art would appreciate that the drawings depict elements simply and clearly and have not necessarily been drawn to scale. For example, to facilitate understanding of various embodiments, the dimensions of some elements illustrated in the drawings may be exaggerated compared to other elements. Additionally, elements of the known art that are useful or essential in commercially viable embodiments may often not be depicted so as not to interfere with the spirit of the various embodiments of the present disclosure.

### DETAILED DESCRIPTION

Hereinafter, embodiments of the present disclosure will be described in detail with reference to the accompanying drawings so that those skilled in the art may readily implement the present disclosure. The following description is provided by way of example of various aspects of embodiments, and in describing one embodiment, specific descriptions of known functions or configurations will be omitted in order to clarify the gist of the present disclosure.

A component having a common function with a component included in one embodiment is described using the same name in another embodiment. The terms or words used in the specification and the claims should not be construed as being limited to general and dictionary meanings, but should be interpreted as the meanings and concepts corresponding to the technical idea of the present disclosure based on the principle that the inventor is allowed to define terms appropriately in order to explain his/her invention in the best way possible.

In addition, the present disclosure is not limited to the embodiments described herein, and various modifications and variations thereof may be made by those with ordinary skill in the art to which the present disclosure pertains, based on the description. Therefore, the idea of the present disclosure should not be limited to the embodiments described herein, and the claims and all of modifications equal or equivalent to the claims are intended to fall within the scope and spirit of the present disclosure.

In a manufacturing process of a pouch-type secondary battery, when a pouch, which is a packaging material, and an electrode lead are heat-sealed, a bonding layer on an outer peripheral surface of the pouch, which exists in the form of a thin film, becomes in a flow state due to the applied heat and pressure, and thus, its thickness is generally reduced compared to its state before being bonded. The bonding layer having the reduced thickness is pushed in both side directions due to the applied pressure and the intrinsic characteristics of the flow state. Due to the pushing (leakage) phenomenon, a groove having a V-shape may be formed, causing a sharp portion in the heat-sealed bonding layer itself, or grooves having an unequal wavy shape may be formed in the heat-sealed bonding layer, which may affect the durability and quality of the pouch-type secondary battery.

In consideration of this fact, an embodiment of the present disclosure may provide a sealing device capable of suppressing or preventing a lead film covering a lead metal from flowing into an inner-outer direction of a pouch, during sealing.

### Comparative Example

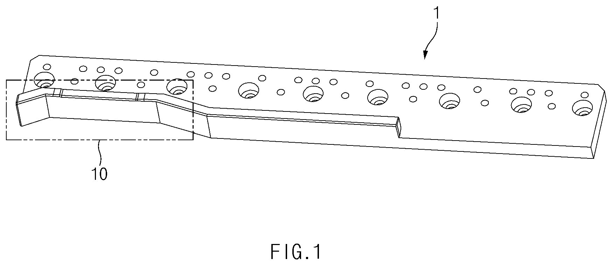

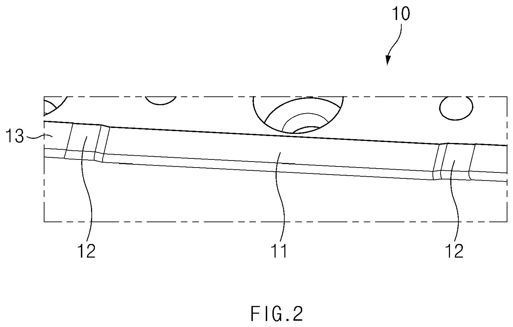

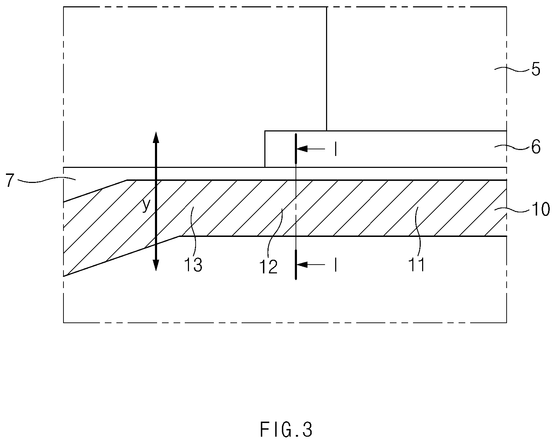

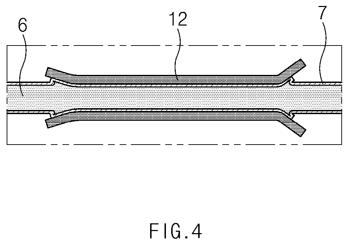

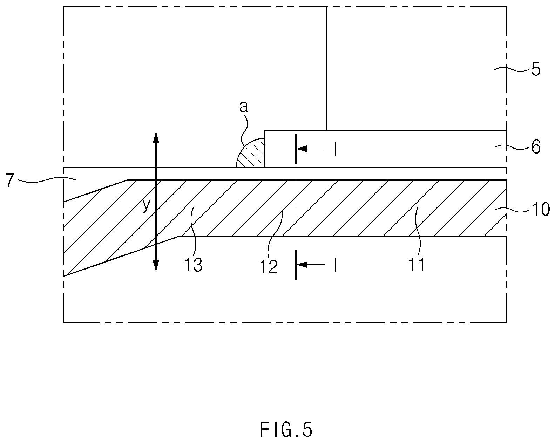

FIGS. 1 to 5 illustrate a sealing device according to a comparative example of the present disclosure. FIG. 1 is a perspective view of a sealing block 1 of a sealing device, according to the comparative example of the present disclosure. FIG. 2 is a partial perspective view of a sealing portion 10 of the sealing block 1 of the sealing device, according to the comparative example of the present disclosure. FIG. 3 is a schematic plan view illustrating a form of the sealing device, according to the comparative example of the present disclosure, sealing a lead film 6 and a pouch 7. FIG. 4 is a cross-sectional view taken along line I-I of FIG. 3. FIG. 5 illustrates a phenomenon in which the lead film 6 protrudes in a width direction y of a sealing surface in a sealing process.

Referring to FIGS. 1 to 3, the sealing block 1 of the sealing device according to the comparative example of the present disclosure may include the sealing portion 10.

The sealing portion 10 may be provided in a portion of the sealing block 1 to seal the lead film 6 covering a lead metal 5 of an electrode lead of a secondary battery and the pouch 7 enclosing the lead film 6. The sealing portion 10 may press and apply heat to the lead film 6 and the pouch 7 enclosing the lead film 6 to heat-seal the pouch 7 and the lead film 6. Although one sealing block 1 provided with the sealing portion 10 is illustrated in FIG. 1, a pair of sealing blocks 1 provided with the sealing portion 10 may be provided on one side and the other side of the electrode lead and the pouch 7. For example, a pair of sealing blocks 1 may press and apply heat to the lead film 6 and the pouch 7 enclosing the lead film 6 upwards and downwards to heat-seal the pouch 7 and the lead film 6.

The sealing portion 10 may include a plurality of sealing surfaces 11, 12 and 13 on which the pouch 7 and the lead film 6 are compressed. The sealing surfaces 11, 12 and 13 may come into contact with the pouch 7 enclosing the lead film 6, and press the pouch 7 and transfer heat to the pouch 7. As illustrated in FIG. 2, the sealing surfaces 11, 12 and 13 may include a first sealing surface 11, second sealing surfaces 12, and a third sealing surface 13.

The first sealing surface 11 may be provided to seal a central portion of the lead film 6 overlapping with the lead metal 5 of the electrode lead. The first sealing surface 11 may press and apply heat to the central portion of the lead film 6 and the pouch 7 to seal them. The second sealing surfaces 12 may be provided to seal left and right edge portions of the lead film 6. The second sealing surfaces 12 are provided on both end portions of the first sealing surface 11 and may be stepped at a predetermined height in a pressing direction of the sealing block 1 from the sealing surface 11. According to an embodiment, the second sealing surfaces 12 may be formed higher than the first sealing surface 11 by a predetermined height. The third sealing surface 13 may be provided on an outside of the second sealing surfaces 12, and press and apply heat to the pouch 7 to seal adjacent pouches 7.

Referring to FIGS. 3 and 4, the lead film 6 covering the lead metal 5 and the pouch 7 enclosing the lead film 6 may be sealed by the sealing portion 10 of the sealing block 1. In this case, the edge portion of the lead film 6 not overlapping with the lead metal 5 may be sealed by the second sealing surfaces 12 of the sealing portion 10. In the sealing device according to the comparative example of the present disclosure, the second sealing surfaces 12 may be provided in the form of a flat plate without a protrusion. When the lead film 6 is pressed in both directions by the second sealing surfaces 12 in the form of the flat plate, the leakage of the lead film 6 may occur. For example, when the lead film 6 heated by the sealing portion 10 provided on a pair of sealing blocks 1 is pressed upwards and downwards, the lead film 6 in a molten state may be pushed and leaked leftwards and rightwards and/or upwards and downwards of the pouch.

Referring to FIG. 5, it may be confirmed that a leakage phenomenon of the lead film 6 occurs in a process of sealing the pouch 7 and the lead film 6 by the sealing portion 10. The lead film 6 pressed in both directions by the second sealing surfaces 12 in the form of a pair of flat plates may protrude (indicated as "a" in FIG. 5) in a width direction y of the second sealing surface 12 by a pressure applied in the both directions. FIG. 3 also illustrates that the lead film 6 may protrude in the width direction y of the second sealing surface 12. When the lead film 6 protrudes in the width direction y of the second sealing surface 12, a surface of the pouch 7 enclosing the lead film 6 may be grooved or corrugated, and further, a defect such as a gap between the pouch 7 and the lead film 6 may occur. With reference to the following drawings, a sealing device according to the embodiments of the present disclosure for addressing the limitations will be described.

### Embodiment 1

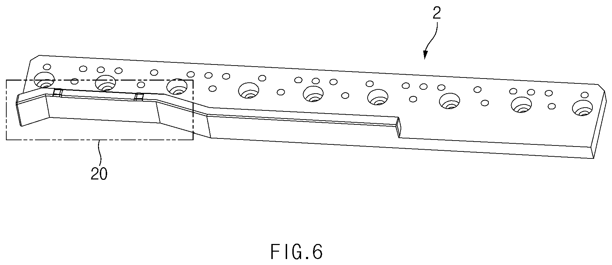

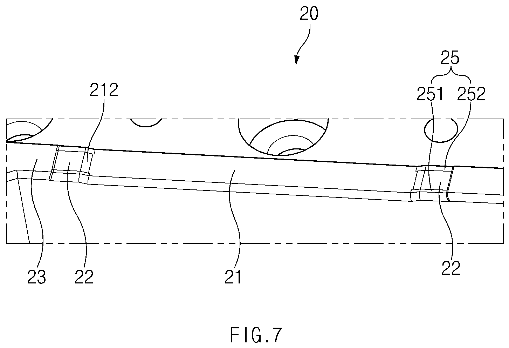

FIGS. 6 and 7 illustrate a sealing device according to the embodiment 1 of the present disclosure.

FIG. 6 is a perspective view of a sealing block 2 of a sealing device according to the embodiment 1 of the present disclosure, and FIG. 7 is a partial perspective view illustrating a sealing portion 20 of the sealing block 2 of the sealing device according to the embodiment 1 of the present disclosure.

Referring to FIGS. 6 to 8, the sealing block 2 of the sealing device according to the embodiment 1 of the present disclosure may include the sealing portion 20. The sealing portion 20 may be provided in a portion of the sealing block 2 to seal a lead film 6 covering a lead metal 5 of an electrode lead of a secondary battery and a pouch 7 enclosing the lead film 6. The sealing portion 20 may press and apply heat to the lead film 6 and the pouch 7 enclosing the lead film 6 to heat-seal the pouch 7 and the lead film 6.

Although one sealing block 2 provided with the sealing portion 20 is illustrated in FIG. 6, a pair of sealing blocks 2 provided with the sealing portion 20 may be disposed to be spaced apart from each other in a pressing direction of the sealing block 2. For example, a pair of sealing blocks 2 may press and apply heat to the lead film 6 and the pouch 7 enclosing the lead film 6 upwards and downwards to heat-seal the pouch 7 and the lead film 6.

The sealing portion 20 may include a plurality of sealing surfaces 21, 22 and 23 on which the pouch 7 and the lead film 6 are compressed. The sealing surfaces 21, 22 and 23 may come into contact with the pouch 7 enclosing the lead film 6 and press the pouch 7 and transfer heat to the pouch 7. As illustrated in FIG. 7, the sealing surfaces 21, 22 and 23 may include a first sealing surface 21, second sealing surfaces 22, and a third sealing surface 23.

The first sealing surface 21 may be provided to seal a central portion of the lead film 6 overlapping with the lead metal 5 of the electrode lead. The first sealing surface 21 may press and apply heat to the central portion of the lead film 6 and the pouch 7 to seal them. The second sealing surfaces 22 may be provided to seal left and right edge portions of the lead film 6. The second sealing surfaces 22 are provided on both end portions of the first sealing surface 21 and may be stepped at a predetermined height in a pressing direction of the sealing block 2 from the first sealing surface 21. According to an embodiment, the second sealing surface 22 may be formed higher than the first sealing surface 21 by a predetermined height. In addition, at a connection portion between the second sealing surface 22 and the first sealing surface 21, an inclined portion 212 that is inclined due to a step therebetween may be formed. The third sealing surface 23 may be provided on an outside of the second sealing surface 22, and press and apply heat to the pouch 7 to seal adjacent pouches 7.

The sealing portion 20 of the sealing device according to the embodiment 1 of the present disclosure may include sealing protrusions 25. The sealing protrusions 25 may be provided on portions of the sealing surfaces 21, 22 and 23 to suppress or prevent the leakage of the lead film 6, during sealing. The sealing protrusions 25 may be formed to protrude from the sealing surfaces 21, 22 and 23 in a pressing direction of the sealing block 2, for example, in a direction perpendicular to the sealing surfaces 21, 22 and 23, with a predetermined thickness.

According to an embodiment, the sealing protrusion 25 may be provided on the second sealing surfaces 22. The sealing protrusion 25 may be formed to protrude from the second sealing surfaces 22 with a predetermined thickness, and may be formed on a portion of the second sealing surfaces 22 provided to seal the left and right edge portions of the lead film 6. The sealing protrusion 25 may have a shape extending in a length direction perpendicular to a width direction of the second sealing surface 22. For example, the sealing protrusion 25 may be formed in a shape of a bar having a rectangular shape.

Referring to FIG. 7, the sealing protrusion 25 may be provided as a plurality of sealing protrusions. For example, the sealing protrusion 25 may be formed as a pair of sealing protrusions. In this case, the sealing protrusion 25 may include a first sealing protrusion 251 and a second sealing protrusion 252 that is spaced apart from the first sealing protrusion 251 in the width direction of the second sealing surface 22. The first sealing protrusion 251 and the second sealing protrusion 252 may be spaced apart from each other in a parallel manner in the width direction of the second sealing surface 22.

The first sealing protrusion 251 and the second sealing protrusion 252 may be positioned at both end portions of the width direction of the second sealing surface 22, respectively. The first sealing protrusions 251 may be positioned at the inner ends of the sealing surfaces 21, 22 and 23 in which an electrode assembly (not shown) is positioned, and the second sealing protrusions 252 may be positioned at the outer ends of the sealing surfaces 21, 22 and 23, which face outward, respectively. The first sealing protrusion 251 and the second sealing protrusion 252 may be formed to have, for example, the same width and the same length. Thicknesses of the first sealing protrusion 251 and the second sealing protrusion 252 protruding from the second sealing surface 22 may also be identical to each other. The first sealing protrusion 251 and the second sealing protrusion 252 may extend in the length direction perpendicular to the width direction of the second sealing surface 22, but may extend to the inclined portion 212 connecting the first sealing surface 21 and the second sealing surface 22.

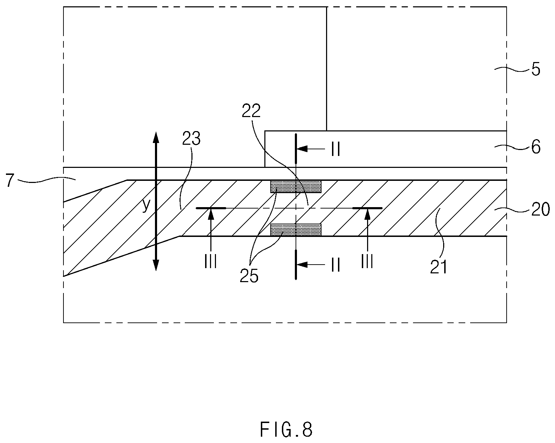

By employing the configuration of the sealing protrusion 25, it is possible to suppress or prevent the leakage of the lead film 6 in the width direction y of the second sealing surface 22, when the lead film 6 and the pouch 7 are sealed by the sealing portion 20. The width direction y of the second sealing surface 22 may be a length direction of the lead metal 5, for example, an inner-outer direction of the pouch 7. The mechanism by which the sealing protrusion 25 suppresses or prevents the leakage of the lead film 6 will be described below with reference to FIGS. 8 to 10.

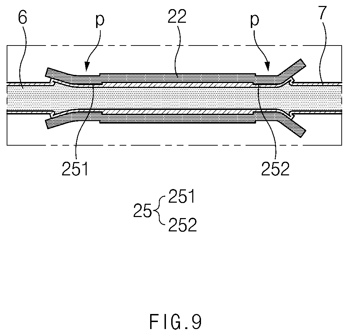

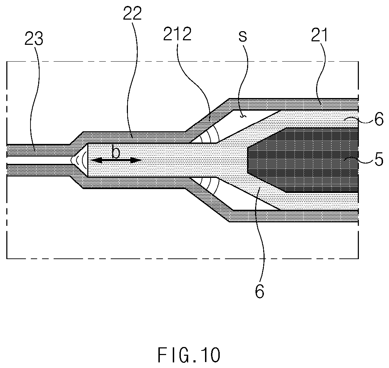

FIG. 8 is a schematic plan view illustrating a form of the sealing device according to the embodiment 1 of the present disclosure, sealing the lead film 6 and the pouch 7. FIG. 9 is a cross-sectional view illustrating a cross-section taken along line II-II of FIG. 8. FIG. 10 is a cross-sectional view illustrating a cross-section taken along line III-III of FIG. 8.

Referring to FIGS. 8 to 10, according to an embodiment, the sealing protrusions 25 may be provided on the second sealing surface 22 sealing the edge portion of the lead film 6, which does not overlap with the lead metal 5. A pair of sealing protrusions 25 may be provided on the second sealing surface 22 to be spaced apart from each other in the width direction of the second sealing surface 22. The first sealing protrusion 251 may be formed at the inner end of the second sealing surface 22, and the second sealing protrusion 252 may be formed at the outer end of the second sealing surface 22, respectively.

When the sealing portion 20 presses the pouch 7, a greater degree of pressure p may be formed on the lead film 6 at a position corresponding to the sealing protrusion 25 on the second sealing surface 22, compared to a portion of the second sealing surface 22 where the sealing protrusion 25 is not formed.

For example, a pressure p is generated by the sealing protrusions 25 on portions of the lead film 6 corresponding to the inner end and the outer end of the second sealing surface 22. As a result, it is possible to suppress or prevent a phenomenon in which the lead film 6 is separated in the width direction y of the second sealing surface 22, *e.g.,* in a direction toward the inner end/outer end of the second sealing surface 22 (inner-outer direction of the pouch) from a corresponding position.

In this case, the lead film 6 pressed by the second sealing surface 22 may move in a direction of filling a gap s generated between the pouch 7 and the lead film 6, instead of being separated in the inner-outer direction of the pouch 7 (see, *e.g.,* FIG. 10). The gap s may be generated between the pouch 7 and the lead film 6 due to a shape of the sealing portion 20. The lead film 6 whose shape is deformed by heat-sealing and pressing may flow in a length direction b perpendicular to a width direction of the second sealing portion 20 to fill the gaps.

### Embodiment 2

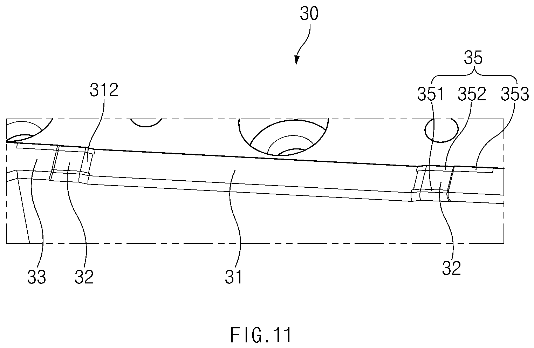

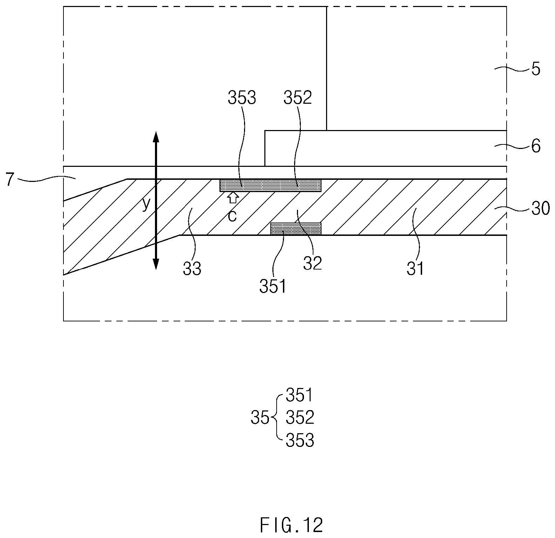

FIGS. 11 and 12 illustrate a sealing device according to the embodiment 2 of the present disclosure. FIG. 11 is a partial perspective view illustrating a sealing portion 30 of a sealing device according to the embodiment 2 of the present disclosure, and FIG. 12 is a schematic plan view illustrating a form of the sealing device according to the embodiment 2 of the present disclosure, sealing a lead film 6 and a pouch 7.

The sealing device according to the embodiment 2 of the present disclosure may differ from that of the embodiment 1 in that the sealing device according to the embodiment 2 further includes a third sealing protrusion 353. Except for the difference, it should be noted that the contents of the secondary battery according to the embodiment 1 of the present disclosure described above may be commonly applied to the embodiment 2. Therefore, contents common to those of the embodiment 1 will be omitted when possible, and the embodiment 2 will be described with focus on the differences from the embodiment 1.

Referring to FIGS. 11 and 12, the sealing device according to the embodiment 2 of the present disclosure may further include a third sealing protrusion 353. According to an embodiment, the third sealing protrusion 353 may extend from a second sealing protrusion 352 formed on a second sealing surface 32 and may be provided on a third sealing surface 33. Similar to the first sealing protrusion 351 and the second sealing protrusion 352, the third sealing protrusion 353 may protrude from the third sealing surface 33 with a predetermined thickness. The third sealing surface 33 may be provided on an outside of the second sealing surface 32 that seals an edge portion of the lead film 6 and may seal pouches 7. On one side of the second sealing surface 32, a first sealing surface 31 may be provided to seal a central portion of the lead film 6 overlapping with the lead metal 5 of the electrode lead. On the other side of the second sealing surface 32, a third sealing surface 33 may be provided to seal the adjacent pouches 7.

A first sealing protrusion 351 and a second sealing protrusion 352 may be formed on an inner end and an outer end of a width direction of the second sealing surface 32, respectively, and the first sealing protrusion 351 and the second sealing protrusion 352 may be formed to have the same length and the same width. As described above, the first sealing protrusion 351 and the second sealing protrusion 352 may prevent a phenomenon in which the lead film 6 protrudes in the width direction y of the second sealing surface 32 during sealing.

The third sealing protrusion 353 may be formed to extend from the second sealing protrusion 352. For example, the third sealing protrusion 353 and the second sealing protrusion 352 may be connected integrally. In this case, for example, the third sealing protrusion 353 may have the same width and the same thickness as those of the second sealing protrusion 352 and the first sealing protrusion 351.

The third sealing protrusion 353 is additionally formed on the third sealing surface 33 to be connected to the second sealing protrusion 352, so that it is possible to additionally suppress or prevent the lead film 6 from leaking out toward the outside of the pouch 7 (indicated as "c" in FIG. 12).

In the above description, although the present disclosure has been described by limited embodiments and drawings, the above description is merely an example of the technical idea of the present disclosure, and those skilled in the art will appreciate that various modifications and variations may be made without departing from the essential characteristics of the present disclosure.

Therefore, the embodiments disclosed in the present disclosure are not intended to limit the technical idea of the present disclosure, but rather to explain it, and the scope of the technical idea of the present disclosure is not limited by these embodiments. The scope of protection of the present disclosure should be interpreted by the claims below, and all technical ideas within the scope equivalent thereto should be interpreted as being included in the scope of the rights of the present disclosure.

### LIST OF REFERENCE NUMERALS

1, 2: sealing block
10, 20, 30: sealing portion
11, 21, 31: first sealing surface
12, 22, 32: second sealing surface
13, 23, 33: third sealing surface
25, 35: sealing protrusion
251, 351: first sealing protrusion
252, 352: second sealing protrusion
353: third sealing protrusion
5: lead metal
6: lead film
7: pouch

## Claims

1. A sealing device comprising:
a sealing block including at least one sealing surface provided to press a lead film covering a lead metal of an electrode lead and a pouch enclosing the lead film, the lead film and the pouch overlapping with each other; and
a sealing protrusion provided on a portion of the sealing surface to protrude from the sealing surface with a predetermined thickness in a pressing direction of the sealing block to suppress or prevent the lead film from flowing into a width direction of the sealing surface.

2. The sealing device according to claim 1, wherein the sealing surface includes,
a first sealing surface provided to seal a central portion of the lead film overlapping with the lead metal; and
a second sealing surface formed on both end portions of the first sealing surface to be stepped from the first sealing surface to seal an edge portion of the lead film.

3. The sealing device according to claim 2, wherein the sealing protrusion is provided on the second sealing surface.

4. The sealing device according to claim 2, wherein the sealing protrusion has a shape extending along a length direction perpendicular to a width direction of the second sealing surface.

5. The sealing device according to claim 4, wherein a plurality of sealing protrusions is provided to be spaced apart in the width direction of the second sealing surface.

6. The sealing device according to claim 2, wherein the sealing protrusion is formed on an end of a width direction of the second sealing surface.

7. The sealing device according to claim 2, wherein the sealing protrusion includes:
a first sealing protrusion formed on the second sealing surface; and
a second sealing protrusion provided to be spaced apart from the first sealing protrusion in the width direction of the second sealing surface.

8. The sealing device according to claim 7, wherein the first sealing protrusion is formed at one end portion of the second sealing surface, and
the second sealing protrusion is formed at the other end portion of the second sealing surface.

9. The sealing device according to claim 8, wherein the sealing surface further includes a third sealing surface that is positioned on an opposite side of the first sealing surface based on the second sealing surface and seals pouches,
wherein the sealing protrusion further includes a third sealing protrusion that is provided on the third sealing surface and extends from the second sealing protrusion.

10. The sealing device according to claim 1, wherein the sealing block is provided as a pair of sealing blocks that is spaced apart from each other in the pressing direction.
